# EUROPÄISCHE PATENTSCHRIFT

(11) **EP 1 918 192 B1**
(45) Veröffentlichungstag und Bekanntmachung des Hinweises auf die Patenterteilung: **30.11.2011**
(21) Anmeldenummer: 07021261.8
(22) Anmeldetag: 31.10.2007
(51) Int. Cl.: B63G 8/08, B63H 23/24

(54) **Unterseeboot**
Submarine
Submersible

(30) Priorität: 03.11.2006 DE 102006051831
(43) Veröffentlichungstag der Anmeldung: 07.05.2008
(73) Patentinhaber: Howaldtswerke-Deutsche Werft GmbH, 24143 Kiel (DE)
(72) Erfinder: Pischke, Sabine Dipl.-Ing., 23719 Glasau (DE); Iwers, Uwe-Jens Dipl.-Ing., 23568 Lübeck (DE)
(74) Vertreter: Hemmer, Arnd

(56) Entgegenhaltungen:
- DE-B3-102005 031 761
- US-A- 4 407 903

## Beschreibung

Die Erfindung betrifft ein Unterseeboot mit zumindest einem elektrischen Fahrmotor und einer Batterieanordnung.

Unterseeboote, insbesondere konventionell angetriebene Unterseeboote, weisen üblicherweise einen elektrischen Fahrmotor auf, welcher bei getauchter Fahrt von Batterien mit elektrischer Energie versorgt wird. Bislang werden als Batterien üblicherweise Bleibatterien verwendet, welche einen relativ kleinen Innenwiderstand aufweisen. Doch dieser Innenwiderstand ist groß genug, um Kurzschlussströme in einem Rahmen zu halten, dass sie mittels gebräuchlicher Schaltanlagen und Sicherungen beherrschbar sind.

DE 102005031761 wird als nächstliegender Stand der Technik betrachtet und offenbart den Oberbegriff des Anspruchs 1.

Aus DE 103 25 456 A1 ist der Aufbau eines Versorgungsnetzes für die elektrischen Verbraucher eines Unterseebootes bekannt. Dieses Versorgungsnetz ist geteilt ausgebildet, sodass im Normalbetrieb zwei unabhängige Versorgungsnetze vorhanden sind, welche jeweils mit eigenen Energieerzeugungssystemen, Energiespeichern und Bordnetzumformern zur Erzeugung der erforderlichen Bordnetzspannung versehen sind. Jedes dieser beiden Versorgungsnetze speist darüber hinaus eine Hälfte des Fahrmotors. Als Energiespeicher sind auch bei diesen Versorgungsnetzen Blei-Akkumulatoren vorgesehen.

Neuartige Batteriearten, z.B. Nickelmetallhydrid- oder Lithiumbatterien weisen im Vergleich bei gleichen Energiemengen und Reihenspannungen einen wesentlich geringeren Innenwiderstand auf. Dies führt im Falle von Kurzschlüssen zu wesentlich höheren Summen-Kurzschlussströmen, welche mit den üblichen Schaltanlagen und Sicherungen nicht beherrschbar sind. So können beispielsweise bei dem aus DE 103 25 456 A1 bekannten Bordnetz-Aufbau die Blei-Akkumulatoren nicht ohne weiteres durch solche neuartige Batteriearten mit geringerem Innenwiderstand ersetzt werden.

Es ist daher Aufgabe der Erfindung, ein Unterseeboot mit einem elektrischen Fahrmotor und einer Batterieanordnung bereitzustellen, welches auch beim Einsatz von Batterien mit geringerem Innenwiderstand einen sicheren Betrieb der elektrischen Anlagen und insbesondere die Ausschaltfähigkeit im Kurzschlussfall sicherstellt.

Diese Aufgabe wird durch ein Unterseeboot mit den im Anspruch 1 angegebenen Merkmalen gelöst. Bevorzugte Ausführungsformen ergeben sich aus den Unteransprüchen, der nachfolgenden Beschreibung sowie den beigefügten Zeichnungen.

Das erfindungsgemäße Unterseeboot weist zumindest einen elektrischen Fahrmotor auf, welcher den oder einen Propeller des Unterseebootes antreibt. Ferner ist eine Batterieanordnung vorgesehen, welche den Fahrmotor mit elektrischer Energie versorgen kann. Die Versorgung mit elektrischer Energie wird insbesondere im getauchten Zustand von den Batterien geleistet, wobei ggf. in dem Unterseeboot zusätzlich ein außenluftunabhängiges Antriebssystem (AIP-System), beispielsweise ein Kreislaufdiesel, ein Sterlingmotor oder eine Brennstoffzellenanlage, vorgesehen sein kann, um den Fahrmotor mit elektrischer Energie zu versorgen. Die Batterieanordnung besteht erfindungsgemäß aus zumindest zwei Teilbatterien, wobei diese wiederum aus einer Mehrzahl von Batteriemodulen gebildet sein können, welche in Reihe und/oder parallel geschaltet zueinander angeordnet sind, um die erforderliche Spannung und Leistung der Teilbatterie zu erreichen. Die einzelnen Teilbatterien sind vorzugsweise so ausgebildet, dass jede von Ihnen für sich die erforderliche Bordnetzversorgung sicherstellen kann. Erfindungsgemäß ist darüber hinaus jeder der zumindest zwei Teilbatterien ein separater Spannungswandler bzw. Umformer zugeordnet. Das heißt jede Teilbatterie weist einen eigenen Umformer auf, der vorzugsweise als Wechselrichter oder DC-Spannungswandler ausgeführt ist. Über diesen Umformer wird der Fahrmotor mit elektrischer Energie versorgt, d. h. bestromt. Der Umformer dient dazu, den Fahrmotor mit der erforderlichen elektrischen Energie zu versorgen. Gleichzeitig kann über den Umformer gegebenenfalls auch die Drehzahl des Fahrmotors gesteuert oder geregelt werden.

Durch die erfindungsgemäße Aufteilung der Batterieanordnung in mehrere Teilbatterien wird erreicht, dass die Kurzschlussströme, welche im System auftreten können, gering gehalten werden können. Da nicht mehr alle Batterien bzw. Batterienmodule gemeinsam über eine Sammelschiene mit einem oder mehreren Umformern bzw. dem Fahrmotor verbunden sind, sondern auf einzelne Teilbatterien aufgeteilt sind, kann ein Kurzschluss nur noch in einem einzelnen Umformer bzw. einer einzelnen Teilbatterie auftreten, wobei aufgrund der geringeren Anzahl von Batteriemodulen, welche in einer Teilbatterie angeordnet sind, verglichen mit der Gesamtzahl von Batteriemodulen, der Einzel-Kurzschlussstrom deutlich geringer ist. Dies ermöglicht es auch bei Verwendung von Hochstrombatterien, beispielsweise Lithiumbatterien, die möglicherweise auftretenden Kurzschlussströme auf ein Maß zu begrenzen, dass sie mit herkömmlichen Schaltanlagen bzw. Sicherungen abschaltbar sind.

Über die einzelnen Umformer wird jeweils zumindest ein Teil des Fahrmotors versorgt. Das heißt jede Teilbatterie stellt nicht die gesamte für den Betrieb des Fahrmotors erforderliche Leistung bereit, sondern jeweils nur einen Teil. Jede Teilbatterie versorgt vorzugsweise nur einen Teil des Fahrmotors bzw. der Fahranlage, d. h. einen zugehörigen Umformer, mit Energie.

Die zumindest zwei Teilbatterien sind mit einem gemeinsamen Bordnetzsystem verbunden. Dies bedeutet, dass die Teilbatterien jeweils unabhängig von einander über jeweils einen eigenen Umformer den Fahrmotor bestromen, jedoch die Versorgung des übrigen Bordnetzsystems, welches die übrigen elektrischen Verbraucher im Unterseeboot versorgt, von den Teilbatterien gemeinsam geleistet wird. Dazu werden die Teilbatterien vorzugsweise in Parallelschaltung mit dem Bordnetzsystem verbunden, so dass jede Teilbatterie für sich die erforderliche Bordnetzspannung bereitstellt. In dem Bordnetzsystem können ein oder mehrere Wechselrichter bzw. Umformer vorgesehen sein, welche die Spannung der Teilbatterien auf die gewünschte Bordnetzspannung transformieren bzw. umformen. So kann im Bordnetzsystem dann beispielsweise auch eine Gleichspannung niederer Spannung oder eine Wechselspannung mit gewünschter Spannung und Frequenz bereitgestellt werden. Die Verbindung der einzelnen Teilbatterien mit dem Bordnetzsystem erfolgt jeweils über eine Entladediode. Die Entladedioden stellen sicher, dass auch bei gemeinsamer Speisung des Bordnetzsystems eine getrennte Speisung der einzelnen Umformer für den Propellermotor nur durch die jeweils zugeordnete Teilbatterie erfolgt. Ferner sind vorzugsweise in jeder Teilbatterie Schalter vorgesehen, mit welchen die einzelnen Teilbatterien dem Energieversorgungssystem jeweils zugeschaltet werden können. Dies ermöglicht es, eine einzelne Teilbatterie im Falle eines Fehlers, z. B. eines Kurzschlusses, auch vom Energieversorgungssystem zu trennen. Ferner kann durch gezieltes Zu- und Abschalten der Teilbatterien auch ein gleichmäßiges Entladen der Teilbatterien bei unterschiedlichen Belastungsfällen erreicht werden. Über die Dioden wird außerdem eine gleichmäßige Entladung aller Teilbatterien sichergestellt, da hierbei nur die Teilbatterie mit der höheren Spannung also höherem Kapazitätspegel überwiegend entladen wird.

Vorzugsweise sind die zumindest zwei Teilbatterien jeweils über zumindest einen Schalter mit dem ihnen zugeordneten Umformer verbunden. Über diesen Schalter kann die elektrische Versorgung des Umformers und damit des Fahrmotors über die zugehörige Teilbatterie ein- und ausgeschaltet werden. So kann die zugehörige Teilbatterie beispielsweise im Kurzschlussfall abgeschaltet werden. Da, wie oben beschrieben, der maximal auftretende Kurschlussstrom einer Teilbatterie im Vergleich zur Gesamtbatterieanlage reduziert ist, kann auch bei Verwendung von Hochstrombatterien dieser Kurzschlussstrom auf ein Maß begrenzt werden, welches durch herkömmliche Schalter und Sicherungen beherrschbar ist.

Weiter bevorzugt sind die zumindest zwei Teilbatterien über eine gemeinsame Ladeeinrichtung aufladbar. Diese Ladeeinrichtung kann beispielsweise ein Generator sein, welcher von einem Dieselmotor angetrieben wird. Alternativ kann auch ein außenluftunabhängiges Antriebssystem, beispielsweise ein Kreislaufdiesel oder eine Brennstoffzellenanlage zum Aufladen der Teilbatterien verwendet werden. Die einzelnen Teilbatterien sind dazu parallel geschaltet und werden gleichzeitig oder nacheinander von einer oder mehreren gemeinsamen Ladeeinrichtungen aufgeladen. Der Ladestrom wird dabei den einzelnen Teilbatterien vorzugsweise über Ladedioden zugeführt, welche in Entladerichtung sperren, so dass sichergestellt ist, dass sich bei keinem Kurzschlussfall im System ein Summenkurzschluss aller Teilbatterien ergeben kann. Außerdem erfolgt dabei die Energieversorgung aus den einzelnen Teilbatterien zum Betrieb des Fahrmotors nicht gemeinsam, sondern wie beschrieben über die einzelnen den Teilbatterien jeweils zugeordneten Umformer.

Die Teilbatterien sind vorzugsweise über eine gemeinsame Sicherung mit dem Bordnetzsystem verbunden. Diese Sicherung trennt im Falle eines Kurzschlusses das Bordnetzsystem von der gesamten Batterieanlage, d.h. von allen Teilbatterien. Da diese Sicherung dem gesamten Batteriesystem nachgeschaltet ist, können hier die hohen Summen-Kurzschlussströme auftreten.

Um diese sicher schalten zu können, ist die Sicherung vorzugsweise derart ausgebildet, dass sie in Abhängigkeit der Geschwindigkeit eines Stromanstieges die Verbindung zu dem Bordnetzsystem trennt. Das heißt, diese Sicherung trennt nicht erst, wenn ein zu hoher Kurzschlussstrom, welcher möglicherweise nicht mehr schaltbar ist, auftritt, sondern bereits vorher. Dabei wird vorzugsweise die Anstiegsgeschwindigkeit des Stromes (di/dt) erfasst, wobei der Strom im Falle eines Kurzschlusses deutlich schneller ansteigt, als es im normalen Betrieb der Fall wäre. Dies ermöglicht es, der Sicherung frühzeitig, bereits vor Auftreten eines zu hohen Stromes, alle Teilbatterien von dem Bordnetzsystem zu trennen. Die Sicherung trennt, wenn die Anstiegsgeschwindigkeit des Stroms über einem vorbestimmten Grenzwert liegt.

Weiter bevorzugt weist jede Teilbatterie eine eigene Sicherung auf, über welche die Teilbatterien mit elektrischen Verbrauchern, insbesondere dem zugeordneten Umformer verbunden ist. Da diese Sicherungen jeweils nur eine Teilbatterie absichert, sind hier die möglicherweise auftretenden Kurzschlussströme geringer, so dass auch bei Verwendung von Hochstrombatterien hier herkömmliche Sicherungen verwendet werden können. Die Sicherung ist vorzugsweise zwischen der Teilbatterie und dem dieser Teilbatterie zugeordneten Umformer angeordnet. Die Sicherung kann beispielsweise dann trennen, wenn in dem Umformer ein Kurzschluss auftritt. Ferner sind diese den einzelnen Teilbatterien zugeordneten Sicherungen vorzugsweise so selektiv ausgelegt, dass sie auch in Verbindung jeder einzelnen Teilbatterie zu einem gemeinsamen Bordnetzsystem im Kurzschlussfall dort nicht auslösen.

Jeder der Umformer ist bevorzugt nur mit einer Teilwicklung des Fahrmotors, d. h. einen Teil des Fahrmotors verbunden. Alle Teilbatterien bringen gemeinsam über ihre jeweils zugehörigen Umformer die für die maximale Antriebsleistung erforderliche elektrische Leistung des Fahrmotors auf. Je nach Anordnung bedeutet der Ausfall einer Teilbatterie und/oder des zugehörigen Umformer, dass nur ein Teil des Antriebsmotors ausfällt bzw. nicht mehr mit elektrischer Energie versorgt wird. Die übrigen Teile der Energieversorgung, d.h. die anderen Teilbatterien und deren Umformer stellen gleichzeitig jedoch weiterhin den Betrieb des Fahrmotors sicher. Möglicherweise kann je nach Ausgestaltung nicht mehr die maximale Drehzahl erreicht werden. Je mehr Teilbatterien und Umformer vorgesehen sind, umso geringer kann jedoch der Leistungsverlust bei Ausfall einer Teilbatterie oder des zugehörigen Umformers gehalten werden.

Gemäß einer ersten bevorzugten Ausführungsform des Unterseebootes sind die den Teilbatterien zugeordneten Umformer Wechselrichter. Das heißt, der von den Umformer mit elektrischer Energie versorgte Fahrmotor ist als Wechselstrommotor ausgebildet. Die Wechselrichter erzeugen aus der von den Teilbatterien abgegeben Gleichspannung jeweils die für den Betrieb des Fahrmotors erforderliche Wechselspannung, wobei auch die Drehzahl des Fahrmotors über die Frequenz der Wechselspannung eingestellt werden kann. Die einzelnen Umformer sind zum Betrieb des Fahrmotors vorzugsweise synchronisiert, so dass die ausgegebenen Wechselspannungen alle die gleiche Phase haben oder um ein gewünschtes Maß phasenversetzt sind.

Gemäß einer zweiten bevorzugten Ausführungsform können die Umformer als Gleichspannungswandler ausgebildet sein. Diese kommen zum Einsatz, wenn der Fahrmotor als Gleichstrommotor ausgebildet ist. Die Gleichspannungswandler bzw. die Gleichspannungssteller (DC/DC-Wandler) setzen die von den Teilbatterien ausgegebene Ausgangsspannung, welche ebenfalls eine Gleichspannung ist, auf die gewünschte Betriebsspannung für den Fahrmotor um. Dabei sind die einzelnen Spannungswandler vorzugsweise nur mit einem Teil des Fahrmotors verbunden, d. h. beispielsweise versorgt jeder Spannungswandler nur eine Teilwicklung bzw. einen Teil der Spulen des Motors. Bei dieser Variante haben die Gleichspannungswandler darüber hinaus vorzugsweise die Funktion die Drehzahl des Fahrmotors über die Spannung zu steuern, d. h. über die Gleichspannungswandler kann die Betriebsspannung des Motors bzw. des dem jeweiligen Spannungswandler zugeordneten Teils des Motors eingestellt werden, so dass über die Spannung die Drehzahl gesteuert werden kann.

Bevorzugt sind die Gleichspannungswandler in Reihe geschaltet und mit dem Fahrmotor verbindbar. Bei dieser Anordnung kann durch Zuschalten der einzelnen Spannungswandler bzw. der diesen zugehörigen Teilbatterien die Betriebsspannung des Fahrmotors verändert werden. Je mehr Gleichspannungswandler dem Fahrmotor in Reihe zugeschaltet werden, je höher wird die Betriebsspannung des Fahrmotors und damit dessen Drehzahl. Diese ermöglicht, durch das Zuschalten einzelner Teilbatterien die Geschwindigkeit des Fahrmotors stufenweise zu steuern. Falls der Fahrmotor nicht mit Volllast, d. h. unter Zuschaltung sämtlicher Teilbatterien betrieben werden soll, werden die Teilbatterien vorzugsweise wechselweise zugeschaltet, um eine gleichmäßige Entladung aller Teilbatterien sicherzustellen.

Die Gleichspannungswandler sind in dem Fahrmotor zu dessen Bestromung vorzugsweise einzeln zuschaltbar, so dass zum einen einzelne Spannungswandler und Teilbatterien bei Fehlern abgeschaltet werden können und zum anderen, wie vorangehend beschrieben, die Betriebsspannung des Fahrmotors bei Reihenschaltung der Gleichspannungswandler durch Zu- und Abschalten einzelner Gleichspannungswandler eingestellt werden kann.

Nachfolgend wird die Erfindung beispielhaft anhand der beigefügten Figuren beschrieben. In diesen zeigt:
- Fig. 1: einen Schaltplan einer Fahranlage eines Unterseebootes mit einem Wechselstrommotor und
- Fig. 2: einen Schaltplan einer Fahranlage mit einem Gleichstrommotor.

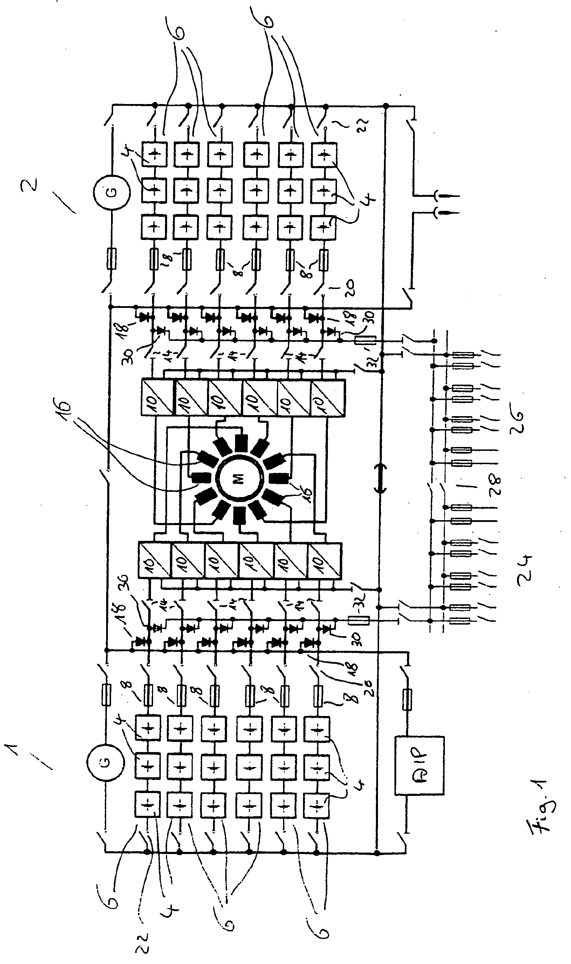

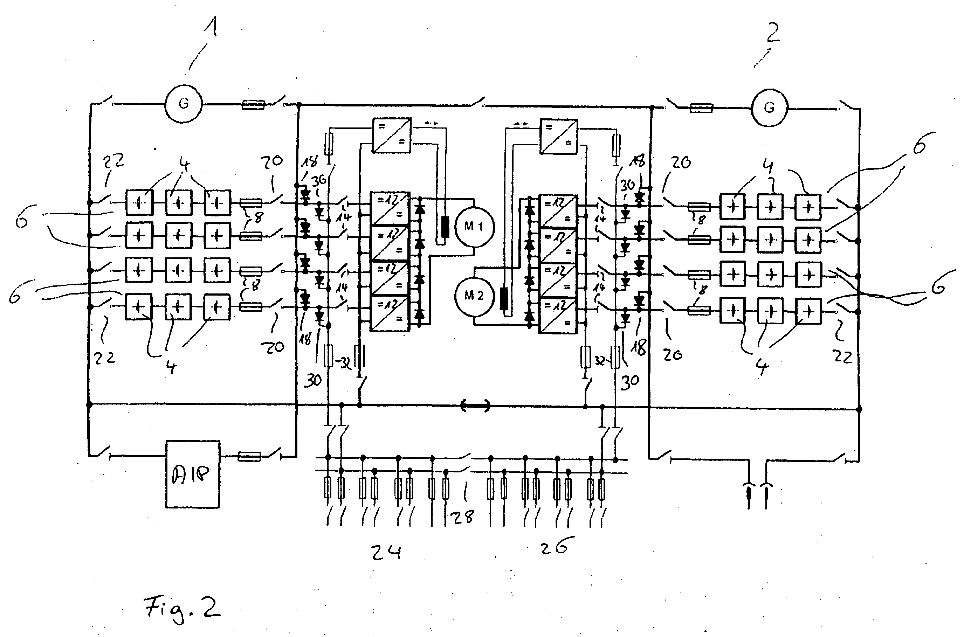

Da die Ausführungsformen gemäß Figuren 1 und 2 in vielen Punkten identisch sind, werden für gleiche Bauteile gleiche Bezugsziffern verwendet und die gleichen Bauteile gemeinsam beschrieben.

Die in Figuren 1 und 2 gezeigten Energieversorgungsanlagen sind zusätzlich zu der erfindungsgemäßen Aufteilung der Batterieanlagen in mehrere Teilbatterien in zwei Energieversorgungsanlagen 1 und 2 aufgeteilt, welche gemeinsam den Antriebsmotor versorgen. Dies dient der Betriebssicherheit, da auch bei Ausfall einer der beiden Energieversorgungsanlagen der Betrieb des Fahrmotors weiterhin möglich ist. Die Energieversorgungsanlagen 1 und 2 sind im Wesentlichen identisch ausgebildet. Die Anordnung mehrerer Teilbatterien ist bei jeder der Energieversorgungsanlagen 1 und 2 vorgesehen.

Die Energieversorgungsanlagen 1 und 2 weisen jeweils eine Anordnung von Batteriemodulen 4 auf. Dabei sind die Batteriemodule 4 in jeder Energieversorgungsanlagen 1, 2 in einzelnen Teilbatterien 6 zusammengefasst. In den einzelnen Teilbatterien 6 sind jeweils mehrere Batteriemodule 4 in Reihe geschaltet. Die einzelnen Teilbatterien 6 sind parallel zueinander angeordnet. Dabei ist jede Teilbatterie 6 mit einer einzelnen Sicherung 8 zur Absicherung versehen.

Bei dem in Figur 1 gezeigten Beispiel ist jeder Teilbatterie 6 ein eigener Umformer in Form eines Wechselrichters 10 zugeordnet. Entsprechend ist bei dem Ausführungsbeispiel gemäß Fig. 2 jeder der Teilbatterien 6 ein Spannungswandler in Form eines Gleichspannungsstellers (DC/DC - Wandler) 12 zugeordnet. Die Umformer 10, 12 sind den jeweils zugeordneten Teilbatterien über Schalter 14 zuschaltbar.

In dem in Fig. 1 gezeigten Beispiel ist jeder Wechselrichter 10 mit einer Teilwicklung 16 des Fahrmotors M verbunden. Dies bedeutet, die maximale Antriebsleistung bzw. maximale Drehzahl des Antriebsmotors wird durch Bestromung aller Spulen bzw. Teilwicklungen 16 des Fahrmotors M erreicht. Hierzu werden alle Teilbatterien 6 über die zugehörigen Schalter 14 elektrisch mit dem jeweils zugehörigen Wechselrichter 10 verbunden, um gemeinsam den Fahrmotor M bestromen bzw. mit elektrischer Energie zu versorgen. Über die Wechselrichter 10 kann durch Änderung der Frequenz der ausgegebenen Wechselspannung die Drehzahl des Fahrmotors M gesteuert werden.

Die Aufteilung der gesamten Batterieanlage in einzelne Teilbatterien 6 und die Zuordnung jeweils eines Spannungswandler 10 zu jeder Teilbatterie 6 hat den Vorteil, dass im Falle eines elektrischen Fehlers bzw. Kurzschlusses in einer Teilwicklung 16 oder einem Spannungswandler 10 im Fahrmotor nicht die gesamte Batterieanlage abgeschaltet werden muss. Darüber hinaus wird der maximal mögliche Kurzschlussstrom durch die begrenzte Anzahl von Batteriemodulen 4 in jeder Teilbatterie 6 gering gehalten, so dass er problemlos durch die Sicherung 8 schaltbar ist. Das heißt als Sicherung 8 kann eine herkömmliche Sicherung Verwendung finden, um im Kurzschlussfall einzelne Teilbatterien 6 abschalten zu können. In dem Fall, dass eine oder mehrere Teilbatterien 6 von dem zugehörigen Wechselrichter 10 getrennt werden sollen, werden dann nicht mehr alle Teilwicklungen bzw. Teilspulen 16 des Fahrmotors M bestromt, der Motor kann dann nicht mehr die maximale Leistung erbringen. Die maximale Antriebsleistung verringert sich entsprechend um den Anteil der jeweiligen Teilbatterie. Im gezeigten Beispiel sind 12 Teilbatterien 6 mit 12 zugeordneten Wechselrichtern 10 vorgesehen. Das heißt bei Ausfall einer Teilbatterie 6 verringert sich die Antriebsleitung um 1/12. Das heißt jedoch umgekehrt, dass 11/12 der Antriebsleistung weiterhin zur Verfügung stehen. Hierdurch wird die Betriebssicherheit erhöht, da im Falle eines elektrischen Fehlers nicht die gesamte Fahranlage 1 oder 2 abgeschaltet werden muss.

Entsprechend ist die Funktionsweise bei der Verwendung von Gleichstrommotoren als Fahrmotor, welcher anhand von Fig. 2 erläutert wird. Dort ist der Fahrmotor in zwei Teilmotoren M1 und M2 aufgeteilt. Diese können gemeinsam einen Propeller oder auch zwei Propeller antreiben. In dem in Fig. 2 gezeigten Beispiel sind die als Gleichspannungssteller 12 ausgebildeten Spannungswandler so geschaltet, dass sie zur Bestromung des zugeordneten Motors M1 bzw. M2 in Reihe geschaltet werden. Dies bedeutet, dass durch Zuschalten einzelner Teilbatterien 6 über den zugehörigen Schalter 14 und dem damit verbundenen Zuschalten einzelner Gleichspannungssteller 12 zum Antrieb des Fahrmotors die Betriebsspannung des Fahrmotors M1, M2 geändert wird. Auf diese Weise lässt sich durch Zu- oder Abschalten von Teilbatterien 6 die Drehzahl des Fahrmotors M1 bzw. M2 einstellen und steuern.

Auch bei dem in Fig. 2 gezeigten Bespiel wird durch die Aufteilung der Batterieanlage in einzelne Teilbatterien 6 eine erhöhte Betriebssicherheit erreicht. Sollten einzelne Teilbatterien 6 und/oder Gleichspannungssteller 12 ausfallen, würden die verbleibenden Teilbatterien 6 und zugehörigen Gleichspannungssteller 12 den Fahrmotor M1 bzw. M2 weiter mit Strom versorgen, so dass dessen Betrieb gewährleistet ist, wobei dann möglicherweise nicht mehr die Maximaldrehzahl erreicht werden kann. Ferner ist es so, dass die maximal schaltbaren Kurzschlussströme, wie oben beschrieben, beschränkt werden, da bei einem Fehler in einem der Gleichspannungssteller 12, d. h. einem Kurzschluss, jeweils nur die zugehörige Teilbatterie 6 über den Schalter 14 oder die Sicherung 8 abgeschaltet wird. Da jede Teilbatterie 6 nur eine begrenzte Anzahl von Batteriemodulen 4 aufweist, ist auch der maximale Kurzschlussstrom, welcher durch die Sicherung 8 geschaltet werden muss, begrenzt, so dass hier herkömmliche Sicherungen eingesetzt werden können.

Das Laden der einzelnen Teilbatterien 6 in den Energieversorgungsanlagen 1 und 2 erfolgt jeweils gemeinsam über einen gemeinsamen Generator G. Der Ladevorgang erfolgt über Ladedioden 18, welche es ermöglichen, alle Teilbatterien 6 in Parallelschaltung mit einem gemeinsamen Generator G zu laden und andererseits beim Entladevorgang sicherstellen, dass die Teilbatterien 6 elektrisch voneinander getrennt bleiben. Die Generatoren G können beispielsweise durch ein Dieselaggregat angetrieben werden. Die Teilbatterien 6 können zusätzlich über Schalter 20 und 22, welche an beiden Polen der Reihenschaltung von Batteriemodulen 4 jeder Teilbatterie 6 angeordnet sind, elektrisch abgetrennt werden, so dass sie beispielsweise auch beim Ladevorgang im Falle eines Fehlers von dem Generator G elektrisch getrennt werden können.

In dem gezeigten Beispiel ist in der Energieversorgungsanlage 1 zusätzlich eine außenluftunabhängige Energieversorgung (AIP-System) AIP vorgesehen. Diese kann beispielsweise ein Stirlingmotor oder eine Brennstoffzellenanlage sein. Über die außenluftunabhängige Energieversorgung AIP können zum einen der Fahrmotor und das Bordnetz gespeist und zum anderen bei Bedarf die Teilbatterien 6 entsprechend der Verwendung des Generators G in Parallelschaltung geladen werden. Ferner können bei Trennung der Schalter 20 und 22 über die außenluftunabhängige Energieversorgung über die Ladedioden 18 bei geschlossenem Schalter 14 auch die Umformer 10 bzw. 12 direkt mit elektrischer Energie zum Betrieb des Fahrmotors M bzw. M1, M2 versorgt werden.

Ferner weisen die Unterseeboote gemäß den Ausführungsbeispielen Fig. 1 und 2 jeweils zwei Bordnetzsysteme 24 und 26 auf, welche alle übrigen elektrischen Verbraucher des Unterseebootes mit Energie versorgen. Diese Bordnetzsysteme 24 und 26 können in bekannter Weise durch Schalter 28 getrennt oder zusammengeschaltet werden. Die Versorgung der Bordnetzsysteme 24 und 26 kann entweder über den Generator 1 bzw. 2, oder aber über das AIP-System oder die Teilbatterien 6 erfolgen. Zur Versorgung des Bordnetzsystems werden die Teilbatterien 6 parallel geschaltet, wobei sie durch die Schalter 20 und 22 einzeln zugeschaltet werden können. Über die Entladedioden 30, von welchen, entsprechend der Ladedioden 18, jeweils eine jeder Teilbatterie 6 zugeordnet ist, sind die einzelnen Teilbatterien 6 an das Bordnetzsystem 24 bzw. 26 angebunden. Die Entladedioden 30 stellen sicher, dass die Teilbatterien 6 gemeinsam in Parallelschaltung das Bordnetzsystem 24, 26 mit Energie versorgen können, aber unabhängig voneinander die Spannungswandler 10, 12 mit elektrischer Energie versorgen.

Die Anbindung der parallel geschalteten Teilbatterien 6 an die Bordnetzsysteme 24 bzw. 26 erfolgt über Sicherungen 32, über welche die Bordnetzsysteme 24, 26 im Kurzschlussfall abgesichert sind. Die Sicherungen 32 sind dabei im Extremfall mit allen parallel geschalteten Teilbatterien 6 verbunden, so dass hier höhere Kurzschlussströme auftreten können. D. h. die Sicherung 32 muss höhere Kurzschlussströme schalten können als die Sicherungen 8.

Hierzu ist die Sicherung 32 vorzugsweise so ausgebildet, dass sie nicht erst beim Erreichen eines unzulässig hohen Kurzschlussstromes schaltet, sondern vielmehr bei einem unzulässig schnellen Anstieg des Stromes (di/dt) schaltet, so dass die Teilbatterien 6 vom Bordnetzsystem 24, 26 bereits vor Erreichen des maximalen Kurzschlussstromes getrennt werden können. Dabei kann als Grenzwert eine Stromanstiegsgeschwindigkeit (di/dt) definiert werden, welche im Normalbetrieb durch Zuschalten einzelner Verbraucher nicht erreicht werden kann.

### Bezugszeichenliste

- 1,2: Energieversorgungsanlagen
- 4: Batteriemodule
- 6: Teilbatterie
- 8: Sicherung
- 10: Wechselrichter
- 12: Gleichspannungssteller
- 14: Schalter
- 16: Teilspulen
- 18: Ladedioden
- 20, 22: Schalter
- 24, 26: Bordnetzsysteme
- 28: Schalter
- 30: Entladedioden
- 32: Sicherungen
- M: Fahrmotor
- M1, M2: Fahrmotoren
- G: Generator
- AIP: System zur außenluftunabhängigen Energieversorung (Air independent propulsion)

## Patentansprüche

1. Unterseeboot mit zumindest einem elektrischen Fahrmotor (M; M1, M2), einer Batterieanordnung und einem Bordnetzsystem (24, 26) wobei die Batterieanordnung zumindest zwei Teilbatterien (6) aufweist **dadurch gekennzeichnet, dass** den Teilbatterien (6) jeweils ein separater Umformer (10; 12) zugeordnet ist, über welchen unabhängig von den anderen Teilbatterien (6) jeweils zumindest ein Teil (16) des Fahrmotors (M; M1, M2) bestrombar ist, und dass die Teilbatterien (6) jeweils über eine Entladediode (30) mit dem gemeinsamen Bordnetzsystem (24, 26) verbunden sind.

2. Unterseeboot nach Anspruch 1, **dadurch gekennzeichnet, dass** die zumindest zwei Teilbatterien (6) jeweils über zumindest einen Schalter (14) mit dem ihnen zugeordneten Umformer (10; 12) verbunden sind.

3. Unterseeboot nach Anspruch 1 oder 2, **dadurch gekennzeichnet, dass** die zumindest zwei Teilbatterien (6) über eine gemeinsame Ladeeinrichtung (G, AIP) aufladbar sind.

4. Unterseeboot nach einem der vorangehenden Ansprüche, **dadurch gekennzeichnet, dass** die Teilbatterien (6) über eine gemeinsame Sicherung (32) mit dem Bordnetzsystem (24, 26) verbunden sind, welche vorzugsweise derart ausgebildet ist, dass in Abhängigkeit der Geschwindigkeit eines Stromanstiegs die Verbindung zu dem Bordnetzsystem (24, 26) trennt.

5. Unterseeboot nach einem der vorangehenden Ansprüche, **dadurch gekennzeichnet, dass** jede Teilbatterie (6) eine eigene Si-cherung (8) aufweist, über welche die Teilbatterie (6) mit elektrischen Verbrauchern, insbesondere dem zugeordneten Umformer (10; 12) verbunden ist.

6. Unterseeboot nach einem der vorangehenden Ansprüche, **dadurch gekennzeichnet, dass** jeder der Umformer (10, 12) nur mit einer Teilwicklung (16) des Fahrmotors (M) verbunden ist.

7. Unterseeboot nach einem der vorangehenden Ansprüche, **dadurch gekennzeichnet, dass** die den Teilbatterien zugeordneten Umformer Wechselrichter (10) sind.

8. Unterseeboot nach einem der Ansprüche 1 bis 6, **dadurch gekennzeichnet, dass** die den Teilbatterien (6) zugeordneten Umformer Gleichspannungswandler (12) sind.

9. Unterseeboot nach Anspruch 8, **dadurch gekennzeichnet, dass** die Gleichspannungswandler (12) in Reihe geschaltet mit dem Fahrmotor (M1, M2) verbindbar sind.

10. Unterseeboot nach Anspruch 8 oder 9, **dadurch gekennzeichnet, dass** die Gleichspannungswandler (12) dem Fahrmotor (M1, M2) zu dessen Bestromung einzeln zuschaltbar sind.

## Claims

1. A submarine with at least one electrical propulsion motor (M; M1, M2), with a battery arrangement and an on-board mains system (24, 26), wherein the battery arrangement comprises at least two part-batteries (6), **characterised in that** in each case a separate converter (10; 12) is assigned to the part-batteries (6), via which converter in each case at least one part (16) of the propulsion motor (M; M1, M2) may be subjected to current independently of the other part-batteries (6), and that the part batteries (6) are in each case connected via a discharge diode (30) to the common on-board mains system (24, 26).

2. A submarine according to claim 1, **characterised in that** the at least two part-batteries (6) in each case via at least one switch (14) are connected to the converter (10; 12) assigned to them.

3. A submarine according to claim 1 or 2, **characterised in that** the at least two part-batteries (6) may be charged via a common charging device (G, AIP).

4. A submarine according to one of the preceding claims, **characterised in that** the part-batteries (6) are connected to the on-board mains system (24, 26) via a common fuse (32) which is preferably designed in a manner such that it separates the connection to the on-board mains system (24, 26) in dependence on the speed of a current increase.

5. A submarine according to one of the preceding claims, **characterised in that** each part-battery (6) has its own fuse (8), via which the part-battery (6) is connected to electrical consumers, in particular to the assigned converter (10; 12).

6. A submarine according to one of the preceding claims, **characterised in that** each of the converters (10, 12) is connected to only one part-winding (16) of the propulsion motor (M).

7. A submarine according to one of the preceding claims, **characterised in that** the converters assigned to the part-batteries are inverters (10).

8. A submarine according to one of the claims 1 to 6, **characterised in that** the converters assigned to the part-batteries (6) are d.c. voltage transformers (12).

9. A submarine according to claim 8, **characterised in that** the d.c. voltage transformers (12), connected in series, may be connected to the propulsion motor (M1, M2).

10. A submarine according to claim 8 or 9, **characterised in that** the d.c. voltage transformers (12) may be individually connected to the propulsion motor (M 1, M2) for subjecting it to current.

## Revendications

1. Sous-marin comprenant au moins un moteur électrique de propulsion (M ; M1, M2), un ensemble de batteries et un système de réseau de bord (24, 26), dans lequel l'ensemble de batteries présente au moins deux batteries partielles (6), **caractérisé en ce qu'**à chacune des batteries partielles (6) est associé respectivement un convertisseur séparé (10 ; 12), par l'intermédiaire duquel au moins une partie (16) du moteur de propulsion (M ; M1, M2) peut être alimentée en courant, indépendamment des autres batteries partielles (6), et **en ce que** chacune des batteries partielles (6) est connectée au système de réseau de bord commun (24, 26) par l'intermédiaire d'une diode de décharge (30).

2. Sous-marin selon la revendication 1, **caractérisé en ce que** chacune desdites au moins deux batteries partielles (6) est connectée au convertisseur (10 ; 12) qui lui est associé, par l'intermédiaire d'au moins un commutateur (14).

3. Sous-marin selon la revendication 1 ou 2, **caractérisé en ce que** lesdites au moins deux batteries partielles (6) peuvent être chargées par l'intermédiaire d'un dispositif de charge commun (G, AIP).

4. Sous-marin selon l'une des revendications précédentes, **caractérisé en ce que** les batteries partielles (6) sont connectées au système de réseau de bord (24, 26) par l'intermédiaire d'un coupe-circuit commun (32) qui est de préférence constitué de telle manière que la connexion au système de réseau de bord (24, 26) soit coupée en fonction de la vitesse d'élévation du courant.

5. Sous-marin selon l'une des revendications précédentes, **caractérisé en ce que** chaque batterie partielle (6) comprend un coupe-circuit (8) qui lui est propre, par l'intermédiaire duquel la batterie partielle (6) est connectée à des consommateurs électriques, en particulier au convertisseur (10 ; 12) qui lui est associé.

6. Sous-marin selon l'une des revendications précédentes, **caractérisé en ce que** chacun des convertisseurs (10,12) est connecté uniquement à un enroulement partiel (16) du moteur de propulsion (M).

7. Sous-marin selon l'une des revendications précédentes, **caractérisé en ce que** les convertisseurs associés aux batteries partielles sont des onduleurs (10).

8. Sous-marin selon l'une des revendications 1 à 6, **caractérisé en ce que** les convertisseurs associés aux batteries partielles (6) sont des convertisseurs de tension continue (12).

9. Sous-marin selon la revendication 8, **caractérisé en ce que** les convertisseurs de tension continue (12) peuvent être reliés en série au moteur de propulsion (M1, M2).

10. Sous-marin selon la revendication 8 ou 9, **caractérisé en ce que** les convertisseurs de tension continue (12) peuvent être reliés individuellement au moteur de propulsion (M1, M2) pour l'alimentation en courant de ce dernier.
